(19) Europäisches Patentamt
European Patent Office
Office européen des brevets

(11) **EP 3 730 977 A1**

(12) **EUROPEAN PATENT APPLICATION**
published in accordance with Art. 153(4) EPC

(43) Date of publication:
**28.10.2020 Bulletin 2020/44**

(51) Int Cl.:
**G02B 5/18** (2006.01)      **G02B 27/42** (2006.01)

(21) Application number: **18899101.2**

(22) Date of filing: **11.01.2018**

(86) International application number:
**PCT/JP2018/000393**

(87) International publication number:
**WO 2019/138479 (18.07.2019 Gazette 2019/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Mitsubishi Electric Corporation
Tokyo 100-8310 (JP)**

(72) Inventors:
• **TAKADA, Yukari
  Tokyo 100-8310 (JP)**
• **HIROSAWA, Kenichi
  Tokyo 100-8310 (JP)**
• **KAMEYAMA, Shumpei
  Tokyo 100-8310 (JP)**

(74) Representative: **Pfenning, Meinig & Partner mbB
Patent- und Rechtsanwälte
Theresienhöhe 11a
80339 München (DE)**

(54) **DIFFRACTIVE OPTICAL COMPONENT AND OPTICAL PATTERN GENERATION DEVICE**

(57)   A diffractive optical element according to the present disclosure includes: a plurality of diffractive optical element segments, each diffractive optical element segment having an asperity shape on the segment's surface to vary phases of light entering the segment according to positions on the segment's surface which the light enters, the each diffractive optical element segment projecting, when the light enters, light having a phase distribution to form a light pattern, wherein the diffractive optical element segments are arranged on a same plane and have, on their surfaces, asperity shapes which are different from each other and correspond to respective light patterns different from each other, the light patterns being formed by light's entering the respective diffractive optical element segments, and wherein the diffractive optical element segments are arranged in respective regions on the diffractive optical element, which are partitioned by lines radially extending from a center of the diffractive optical element to a circumference thereof. By the above configuration, it becomes possible to produce a plurality of light patterns and switch between the light patterns, using a single diffractive optical element.

Fig. 2

**Description**

Technical Field

The present disclosure relates to a diffractive optical element and a light pattern generator to produce a light pattern by using laser light.

Background Art

Diffractive optical elements each of which produces an intended light pattern from its incident light are used for various optical devices and the like. Their typical applications include material processing, printing, optical measurement, and lighting. For example, in a laser processing machine, a diffractive optical element functions to split an incident beam into a plurality of beams. Also, by designing positions and intensities of split light beams, a diffractive optical element is applied to a lighting system to produce a desired light pattern.

A diffractive optical element (DOE) is an element which is a substrate having periodically arranged slits or asperity shapes. The diffractive optical element uses diffractive light generated by the effects of the slits or the asperity shapes, to convert incident light into light having an intended intensity distribution. The phase-type diffractive optical element makes the phase distribution of incident light to be a phase distribution which forms an intended light pattern on the image screen; therefore, in comparison to the amplitude-type diffractive optical element, the phase-type diffractive optical element has an extremely high optical energy efficiency after conversion with respect to the incident light. Therefore, the phase-type diffractive optical element is used, not only as a diffractive optical element generating a diffraction pattern of a simple shape such as a uniform intensity distribution, but also as an element generating a diffraction pattern of a complicated shape.

Conventional methods for switching light patterns include a method as disclosed in Patent Document 1, in which the following steps are performed in a light pattern generator: light from a light source enters a liquid crystal; by varying the applied voltage, the phase pattern of the liquid crystal is changed to vary the phase distribution of the light passing through the liquid crystal, whereby the light pattern generator switches light patterns.

Another conventional method for switching light patterns is a method as disclosed in Patent Document 2, in which the following steps are performed in a light pattern generator: light from a light source enters a liquid crystal; by varying the applied voltage, the phase pattern of the liquid crystal is changed to vary the phase distribution of the light passing through the liquid crystal, whereby the light pattern generator switches light patterns.

Patent Document 3 discloses a projector as a conventional device that includes a diffractive optical element and a rotation mechanism; the projector includes a plurality of light sources and a disk-shaped diffractive optical element having regions whose shapes are asperity shapes different from each other and which are arranged concentrically according to the output wavelengths of the light sources, and the projector rotates the diffractive optical element to make uniform the intensity distribution of light entering a spatial light modulator.

Note that in a case where light patterns are switched in a lighting device that utilizes a liquid crystal to produce the light patterns, a voltage source is necessary for changing the voltage applied to the liquid crystal, increasing the size of the lighting device and increasing the cost thereof. Furthermore, the liquid crystal is also an expensive component; thus, it is difficult to downsize the lighting device and reduce the cost thereof. On the other hand, a light pattern generator using a diffractive optical element is advantageous for downsizing and reducing cost.

Prior Art Documents

Patent Documents

Patent Document 1: Unexamined Patent Application Publication JP, 2014-209237, A
Patent Document 2: Publication number of Japanese translation of PCT international application: JP 2013-505472A
Patent Document 3: Unexamined Patent Application Publication JP, 2013-084009, A

Summary of the Invention

Problems to be Solved by the Invention

In a conventional diffractive optical element, an asperity shape of the element's surface is designed so as to produce an intended light pattern at a specific wavelength on an image screen; therefore, one single diffractive optical element is required for producing one single light pattern. Thus, the problem is that the more light patterns are to be produced, the more diffractive optical elements will be required.

The present disclosure is devised for solving the problem described above, and aimed to obtain a diffractive optical element capable of producing a plurality of light patterns and switching between the light patterns.

Solution to Problems

A diffractive optical element according to the present disclosure includes: a plurality of diffractive optical element segments, each diffractive optical element segment having an asperity shape on the segment's surface to vary phases of light entering the segment according to positions on the segment's surface which the light enters, the each diffractive optical element segment projecting, when the light enters, light having a phase distribution to form a light pattern, wherein the diffractive optical element segments are arranged on a same plane and have, on their surfaces, asperity shapes which are different from each other and correspond to respective light patterns different from each other, the light patterns being formed by light's entering the respective diffractive optical element segments, and wherein the diffractive optical element segments are arranged in respective regions on the diffractive optical element, which are partitioned by lines radially extending from a center of the diffractive optical element to a circumference thereof.

Advantages of the Invention

According to the present disclosure, it is possible to produce a plurality of light patterns and switch between the light patterns, using a single diffractive optical element.

Brief Description of the Drawings

Fig. 1 shows a configuration example of a diffractive optical element 3 and a light pattern generator 100 of Embodiment 1.
Fig. 2 shows an arrangement example in the diffractive optical element 3 of Embodiment 1.
Fig. 3 shows an operation example of the diffractive optical element 3 of Embodiment 1.
Fig. 4 shows another operation example of the diffractive optical element 3 of Embodiment 1.
Figs. 5 show examples of the light pattern produced by the diffractive optical element 3 of Embodiment 1.

Embodiments

Embodiment 1

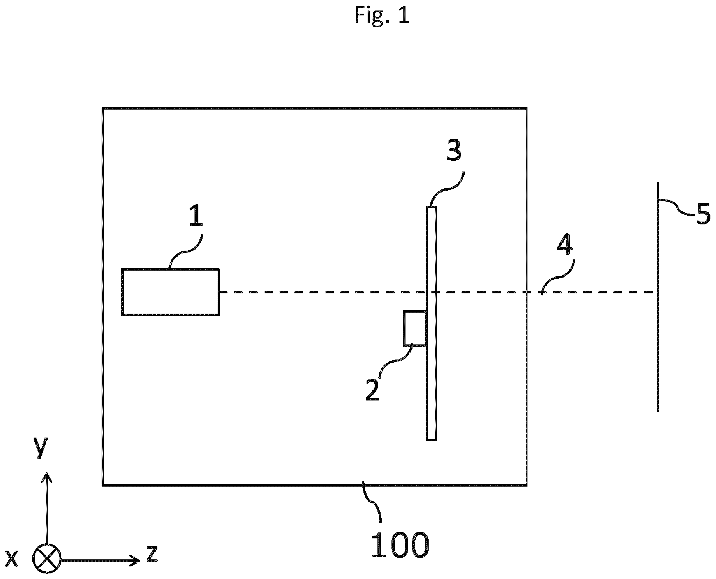

Fig. 1 shows a configuration example of a diffractive optical element 3 and a light pattern generator 100 of Embodiment 1. The light pattern generator 100 includes one laser light source 1, one rotation mechanism 2, and one diffractive optical element 3. In the figure, a direction perpendicular to this sheet is the x-axis direction; a direction perpendicular to the optical axis 5 of the laser light and parallel to this sheet is the y-axis direction; and a direction parallel to the optical axis 5 is the z-axis direction.

The diffractive optical element 3 is an optical element which is made of glass or resin and which is a substrate having periodic slits or asperity shapes. The diffractive optical element uses diffractive light generated by the effects of the slits or the asperity shapes, to convert the light incident on the diffractive optical element 3 into light having an intended intensity distribution at an image screen 5. The Fourier transform image of the phase distribution produced by the diffractive optical element 3 is the light pattern to be produced after propagation. For example, in a case where the phase distribution is expressed as a rectangle function, the light pattern after propagation is expressed as a sinc function, which is a Fourier transform image of the rectangle function. That is, the diffractive optical element 3 has an asperity surface to change the phase of the incident light according to positions on its surface on which the light is incident, and projects, when incident light enters, light having a phase distribution to form a light pattern. The phase distribution of light at the exit face of the diffractive optical element 3 is produced depending on the slits' structure or the asperity shape. Therefore, the diffractive optical element 3 having a single asperity shape structure produces only one single light pattern. Thus, in a case where a plurality of light patterns is to be produced, a conventional technique requires diffractive optical elements for the respective light patterns.

For designing the surface shape of the diffractive optical element 3, an iterative Fourier transform method is usually used. The iterative Fourier transform method is a calculation algorithm using the periodicity in the discrete Fourier transform, and performs its calculation on the assumption that the distribution has a periodicity; therefore, the asperity surface shape of the actual diffractive optical element 3 is an array of phase distribution units each of which is the phase distribution obtained by the iterative Fourier transform method and which are periodically arranged. In a case where the incident light passes through only a single phase distribution unit, the light pattern to be produced is a convolution integral of the phase distribution at the exit face of the diffractive optical element 3 and the rectangle function. Thus, the light pattern to be produced becomes blurrier than a pattern used in the design work. Therefore, the currently used diffractive optical element 3 is one on which a plurality of phase distribution units is arranged. The larger the number of phase distribution unit iterations is, the higher the degree of the mutual strengthening due to interference will be, whereby a light pattern with a higher contrast is produced. Therefore, even in a case where light does not pass through the whole surface of the diffractive optical element 3, but passes through part of the surface thereof, the light pattern can be produced. Because the light pattern to be produced is fixed, when the diffractive optical element 3 is rotated in a plane, the produced light pattern is rotated in accordance with the rotation of the diffractive optical element 3.

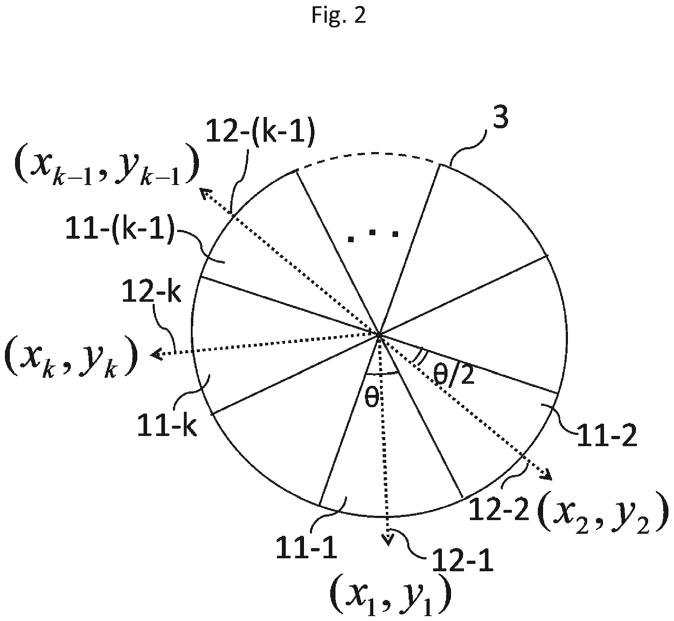

Fig. 2 shows a structure example of the diffractive optical element 3 of the present embodiment. The diffractive optical element 3 has, on a same plane, different asperity shape distributions for respective central angles $\theta$. In a case where the diffractive optical element 3 is equally divided into n parts, the central angle $\theta$ of each of the parts is $2\pi/n$. In Fig. 2, segments 11-1 and 11-2 of the diffractive optical element (hereinafter, referred to as "element segment") are located side-by-side and have asperity shape distributions different from each other; the same goes for element segments 11-(k-1) and 11-k, where k = 1, 2, 3,..., n. Here, the total number of the element segments is n. The element segment 11-k is the k-1th element segment from the element segment 11-1 in the counterclockwise direction. A center line 12-k of element segment is the center line of the element segment 11-k, which is drawn from the center of the element segment 11-k to its circumference, to bisect the central angle of the element segment 11-k. Assuming that the center of the diffractive optical element 3 is an origin, the direction of the center line 12-k of the element segment is defined as $(x_k, y_k)$. When the direction of the center line 12-1 of the element segment 11-1 is represented as $(x_1, y_1)$, the direction $(x_k, y_k)$ of the center line 12-k of the element segment 11-k is expressed as follows:

$$x_k = x_1 \cdot \cos((k-1)\theta) - y_1 \cdot \sin((k-1)\theta)$$

$$y_k = x_1 \cdot \sin((k-1)\theta) - y_1 \cdot \cos((k-1)\theta)$$

The diffractive optical element 3 is designed so that the direction of the center line of each of the element segments 11-1 to 11-k matches the center direction of the light pattern to be displayed. For example, in a case where the element segment 11-1 is designed so that a single light pattern produced thereby is displayed when the center line of the element segment 11-1 is directed downward, the other element segments are also designed so that the light pattern produced by each of the other element segments is displayed when the center line of each of the other element segments is directed downward.

In addition, there is no need for the asperity shape to cover whole part of each sector-shaped region shown in Fig. 2. Instead, it is sufficient for the asperity shape to cover part of each sector-shaped region through which the light passes.

The configuration of the diffractive optical element 3 shown in Fig. 2 is just an example; and it is not always necessary that the diffractive optical element is configured with the element segments having different asperity shape distributions for their respective same central angles $\theta$. For example, the central angles of the element segments may be different from each other. The plurality of the element segments 11-1 to 11-k does not necessarily need to be segmented by straight lines. It suffices that the plurality of the element segments 11-1 to 11-k is arranged in the same plane, and the element segments are arranged in their own respective regions for the diffractive optical element, which are segmented by lines radially extended from the center of the diffractive optical element 3 to its outer periphery.

The rotation mechanism 2 is a mechanism which includes a rotary motor for rotating the diffractive optical element 3 around an axis parallel to the optical axis 4.

The laser light source 1 is a light source to emit laser light with a single wavelength. As for the laser light source 1, for example a semiconductor laser, a fiber laser, or a solid-state laser is used.

The optical axis 4 is an axis of symmetry which is the center of the optical system, and along which the light emitted from the laser light source 1 travels.

The image screen 5 is a screen which reflects or scatters the incident light to display the light patterns. The image screen 5 is positioned in the Fraunhofer region of the light projected from the diffractive optical element 3.

Next, the operation of the light pattern generator 100 of Embodiment 1 will be described.

The laser light emitted from the laser light source 1 enters the diffractive optical element 3. The laser light entering the diffractive optical element 3 is phase-modulated by the diffractive optical element 3 to have a phase distribution according to the asperity shape of the surface thereof. The light projected from the diffractive optical element 3 propagates and produces on the image screen 5 a light pattern being the Fourier transform image of the wavefront having the phase distribution according to the asperity shape.

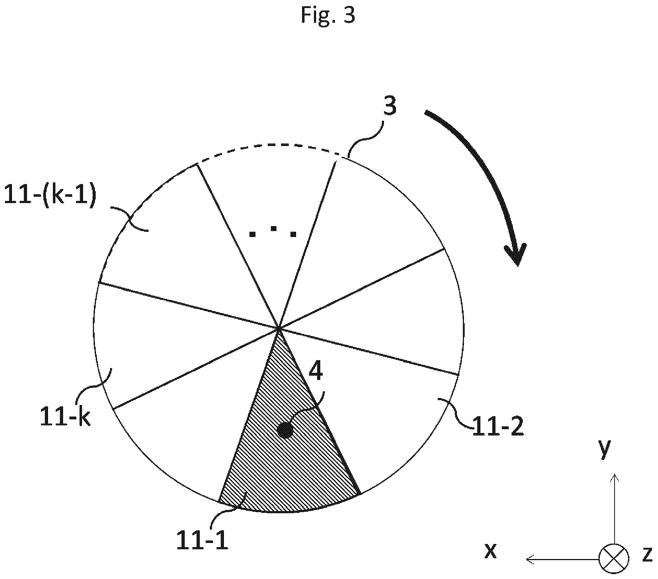

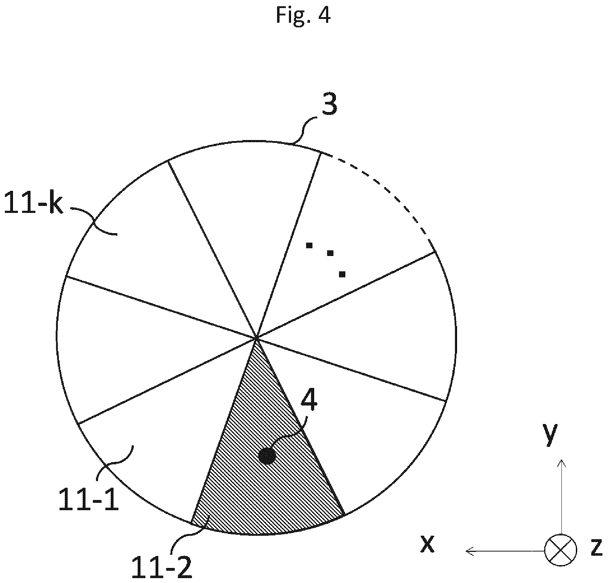

Fig. 3 indicates the position where the laser light from the laser light source 1 enters. A shaded area of the diffractive optical element 3 shown in Fig. 3 is the area where the laser light enters. It suffices that the optical axis 4 passes through any part of the shaded area; and it is not necessary for the incident light to pass through the entire region of the shaded area, but necessary to pass through a part of the region. Fig. 3 shows the state of the diffractive optical element 3 before rotation, and Fig. 4 shows the state after a clockwise rotation by an angle $\theta$. A clockwise rotation is exemplified just for description; however, the rotational direction is not limited to the clockwise rotation. Other rotational direction is applicable if such rotation changes the element segments 11-1 to 11-k for the laser light to enter. In addition, the rotation may be continuous or may be temporarily stopped when each of the element segments 11-1 to 11-k crosses the optical axis 4.

Next, the effect of Embodiment 1 in which the light patterns projected on the image screen 5 are switched will be described.

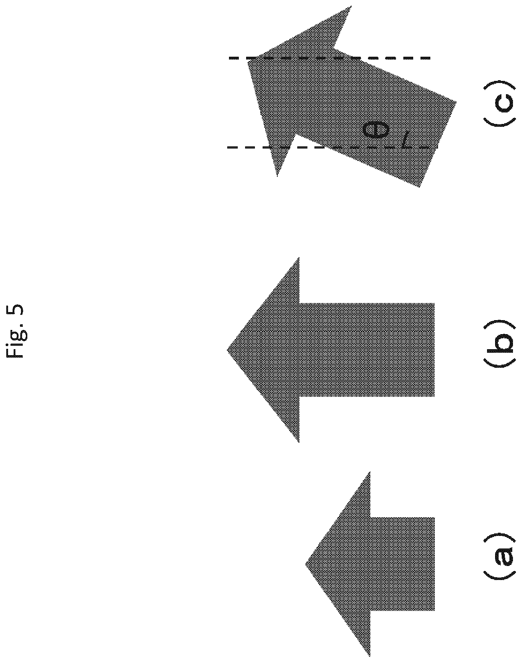

Figs. 5 show examples of the light pattern produced on the image screen 5 by the diffracted light from the diffractive optical element 3. The phase distributions of the element segment 11-1 and the element segment 11-2 are designed so as to produce intensity distributions for the light patterns shown as Fig. 5(a) and 5(b), respectively.

When the diffractive optical element 3 is in a state to project the light pattern shown by Fig. 5(a), the laser light from the laser light source 1 passes through the element segment 11-1. That is, the light pattern of Fig. 5(a) is produced on the image screen 5 by the element segment 11-1. In a case where the diffractive optical element 3 is rotated clockwise around its center by the angle $\theta$ to thereby change its states from the state to project the light pattern shown by Fig. 5(a) to a state to project the light pattern shown by Fig. 5(b), the laser light emitted from the laser light source 1 passes through the element segment 11-2. In a case where the diffractive optical element is designed so as to project light patterns when the center line of each of the element segments 11-1 to 11-k is directed downward, the light pattern caused by the element segment 11-2 is produced on the image screen 5 shown as in Fig. 5(b). In addition, it suffices that in the plurality of the element segments 11-1 to 11-k, each element segment has an asperity surface corresponding to a light pattern that is to be formed when the center line of the element segment is directed in a specific direction from the center of the diffractive optical element 3; the diffractive optical element 3 is not necessarily required to be designed so as to project a light pattern when the center line of each of the element segments 11-1 to 11-k is directed downward.

Suppose that the element segment 11-1 is designed so that the light pattern shown in Fig. 5(a) is projected in a state where the center line of the element segment 11-1 is directed downward, and suppose that the light pattern of the element segment 11-2 is designed in the same direction as that of the element segment 11-1 in a state where the center line of the element segment 11-1 is directed downward. In this case, a light pattern to be produced by the light transmitted through the element segment 11-2 in a state where the center line of the element segment 11-2 is directed downward, is a light pattern shown in Fig. 5(c) which is a pattern rotated by the angle $\theta$. Therefore, each of the element segments 11-1 to 11-k is designed so that the direction of the produced light pattern is varied, which brings an advantage that the light patterns do not rotate as shown in Fig. 5(b) even when the diffractive optical element 3 rotates.

By designing the element segments 11-1 to 11-k so that the light patterns of the element segments located side-by-side are associated with each other, and then by switching the light patterns, the stationary light patterns can be displayed as an animated pattern. Here, the light patterns associated with each other are, for example, light patterns whose figures differ in part, but have the same figure in the rest of the figures.

Fig. 5(a) and Fig. 5(b) are examples of light patterns associated with each other. The light pattern shown in Fig. 5(b) is an arrow- shaped light pattern whose straight part is made longer than that of Fig. 5(a). By switching patterns between Fig. 5(a) and Fig. 5(b) to display the patterns, the arrow can be displayed as an animated pattern.

As so far described, the light pattern generator includes a diffractive optical element 3 on which element segments 11-1 to 11-k each having a different asperity shape distribution are arranged for individual central angles, and a rotation mechanism 2 to rotate the diffractive optical element 3; therefore, the light pattern generator has an advantage that it is possible to switch between a plurality of light patterns and display the patterns with the single diffractive optical element 3.

Furthermore, in a diffractive optical element 3 having different asperity shapes on a plane, the element segments 11-1 to 11-k are designed so that the directions of the produced light patterns are varied, whereby the light patterns can be switched and displayed without being rotated even when the diffractive optical element 3 is rotated.

As described above, according to Embodiment 1, by rotating the diffractive optical element 3 on which the element segments 11-1 to 11-k having different asperity shape distributions are arranged for respective central angles, it is possible to switch between a plurality of light patterns and display the patterns, using the single diffractive optical element 3. Therefore, even in a pattern generator 100 using one diffractive optical element 3, the pattern generator has an advantage to switch between a plurality of light patterns and display the light patterns, by using the diffractive optical element 3 and a rotation mechanism 2 for rotating the diffractive optical element 3.

Also, by associating a light pattern produced by an element segment with a light pattern produced by its side-by-side element segment, the light pattern generator 100 using one diffractive optical element 3 can, when switching between the two light patterns and displaying the light patterns, display an animate light pattern.

Furthermore, with respect to methods for driving the light source 1, both methods of a continuous wave (CW) drive and a pulse drive have the same effect. For example, in a case where the pulse-drive method is applied to the light source 1, pulse timings are synchronized with timings when switching between the state of Fig. 5(a) and the state of Fig. 5(b); in other words, the light source 1 is turned ON in a case where the optical axis 4 passes the element segment 11-1 or 11-2 of the diffractive optical element 3, and the light source is turned OFF while the diffractive optical element 3 is in rotation. By using this configuration, it is possible to avoid a case in which, when light entering the diffractive optical element 3 passes through a region including two element segments, for example the light passes through a region including both element segments of the element segment 11-1 and the element segment 11-2, a light pattern other than those caused by any of the two element segments is produced on the image screen 5.

Therefore, according to Embodiment 1, by using a pulse-driven light source 1 and synchronizing the motion of the diffractive optical element 3 with pulse ON/OFF switching, light patterns other than those due to the element segments can be prevented from being displayed on the image screen 5.

In general, the diffractive optical element 3 is manufactured by forming asperity shapes in accordance with the design distributions on a plate-shaped substrate, and then cutting the substrate into individual elements. Therefore, even a diffractive optical element 3 as shown in Fig. 2 that includes a plurality of element segments each having a different phase distribution can be manufactured not by manufacturing, separately, element segments having individually different phase distributions and then combining the element segments, but by manufacturing in a single manufacturing process, the diffractive optical element 3 including a plurality of element segments each having a different phase distribution. Thus, in comparison to manufacturing diffractive optical elements 3 for individual light patterns, it requires less manufacturing process and fewer kinds of masks for producing asperity shapes. This results in cost reduction in manufacturing.

Thus, according to Embodiment 1, by producing a plurality of element segments each having a different phase distribution in a single element, the manufacturing processes and the mask kinds for producing asperity shapes can be reduced, in comparison to a case of manufacturing diffractive optical elements 3 separately for individual light patterns. This brings an advantage to reduce manufacturing costs.

In the conventional projector disclosed in Patent Document 3, an asperity shape distribution on the surface of the diffractive optical element varies in accordance with the positions at which rays of light each having a different wavelength enter the diffractive optical element, to flatten the intensity distribution of light entering a spatial light modulator. The conventional technique disclosed in Patent Document 3 flattens the intensity distribution of the light, but the conventional technique can neither produce a plurality of light patterns by rotating its diffractive optical element, nor switch light patterns.

As so far described, the diffractive optical element 3 according to the present disclosure includes: a plurality of diffractive optical element segments 11-1 to 11-k, each diffractive optical element segment having an asperity shape on the segment's surface to vary phases of light entering the segment according to positions on the segment's surface which the light enters, the each diffractive optical element segment projecting, when the light enters, light having a phase distribution to form a light pattern, wherein the diffractive optical element segments 11-1 to 11-k are arranged on a same plane and have, on their surfaces, asperity shapes which are different from each other and correspond to respective light patterns different from each other, the light patterns being formed by light's entering the respective diffractive optical element segments 11-1 to 11-k, and wherein the diffractive optical element segments are arranged in respective regions on the diffractive optical element, which are partitioned by lines radially extending from a center of the diffractive optical element 3 to a circumference thereof. By using this configuration, it is possible to project a plurality of light patterns using the single diffractive optical element 3.

In the diffractive optical element 3 according to the present embodiment, each of the diffractive optical element segment 11-1 to 11-k has an asperity surface which corresponds to a light pattern to be formed by receiving incident light when the each diffractive optical element segment is positioned in a specific direction from a center of the diffractive optical element 3. By using this configuration, it is possible to project, even when the diffractive optical element 3 rotates, light patterns without the light patterns' directions being rotated.

The light pattern generator 100 according to the present embodiment includes: a laser light source 1 to emit laser light; the diffractive optical element 3 to receive the laser light; and a rotation mechanism 3 to rotate the diffractive optical element 3 so as to change from a state in which the laser light is incident on one of the diffractive optical element segments included in the diffractive optical element 3 to a state in which the laser light is incident on another diffractive optical element segment included in the diffractive optical element 3. By using this configuration, due to the directivity of laser light, it is possible for the light to pass through one element segment in the diffractive optical element 3.

In the light pattern generator 100 according to the present embodiment, the laser light has a single wavelength. By using this configuration, it is possible to switch between a plurality of patterns and display the patterns by using the diffractive optical element 3 which has asperity shapes on the surface to change the phase of the incident laser light of a single wavelength.

In the light pattern generator 100 according to the present embodiment, two adjacent diffractive optical element segments 11-1 to 11-k included in the diffractive optical element 3 have asperity surfaces for respective light patterns related with each other, the respective light patterns being to be formed by light entering individually the two adjacent diffractive optical element segments. This configuration makes it possible to display stationary light patterns as an animated pattern.

In the light pattern generator 100 according to the present embodiment, the laser light source 3 emits laser light driven by pulses and the rotation mechanism 2 rotates the diffractive optical element 3 in synchronism with pulse timings of the pulses. This configuration makes it possible to prevent images other than the light patterns due to the element segments 11-1 to 11-k from being displayed on the image screen 5.

Description of Symbols

1: light source 2: rotation mechanism 3: diffractive optical element 4: optical axis
5: image screen 11-1 to 11-k: diffractive optical element segment
12-1 to 12-k: center line of element segment 100: light pattern generator

**Claims**

1. A diffractive optical element comprising:

   a plurality of diffractive optical element segments, each diffractive optical element segment having an asperity shape on the segment's surface to vary phases of light entering the segment according to positions on the segment's surface which the light enters, the each diffractive optical element segment projecting, when the light enters, light having a phase distribution to form a light pattern,
   wherein the diffractive optical element segments are arranged on a same plane and have, on their surfaces, asperity shapes which are different from each other and correspond to respective light patterns different from each other, the light patterns being formed by light's entering the respective diffractive optical element segments, and
   wherein the diffractive optical element segments are arranged in respective regions on the diffractive optical element, which are partitioned by lines radially extending from a center of the diffractive optical element to a circumference thereof.

2. The diffractive optical element according to claim 1, wherein each diffractive optical element segment has an asperity surface which corresponds to a light pattern to be formed by receiving incident light when the each diffractive optical element segment is positioned in a specific direction from a center of the diffractive optical element.

3. Alight pattern generator comprising:

   a laser light source to emit laser light;
   the diffractive optical element according to claim 1 or 2 to receive the laser light; and
   a rotation mechanism to rotate the diffractive optical element so as to change from a state in which the laser light is incident on one of the diffractive optical element segments included in the diffractive optical element to a state in which the laser light is incident on another diffractive optical element segment included in the diffractive optical element.

4. The light pattern generator according to claim 3, wherein the laser light has a single wavelength.

5. The light pattern generator according to claim 3 or claim 4, wherein two adjacent diffractive optical element segments included in the diffractive optical element have asperity surfaces for respective light patterns related with each other, the respective light patterns being to be formed by light entering individually the two adjacent diffractive optical element segments.

6. The light pattern generator according to any one of claims 3 through 5, wherein the laser light source emits laser light driven by pulses and the rotation mechanism rotates the diffractive optical element in synchronism with pulse timings of the pulses.

Fig. 1

Fig. 2

EP 3 730 977 A1

Fig. 3

EP 3 730 977 A1

Fig. 4

EP 3 730 977 A1

Fig. 5

(a)　(b)　(c)

## INTERNATIONAL SEARCH REPORT

| International application No. |
|---|
| PCT/JP2018/000393 |

**A. CLASSIFICATION OF SUBJECT MATTER**
Int. Cl. G02B5/18(2006.01)i, G02B27/42(2006.01)i

According to International Patent Classification (IPC) or to both national classification and IPC

**B. FIELDS SEARCHED**

Minimum documentation searched (classification system followed by classification symbols)
Int. Cl. G02B5/18, G02B27/42

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-280085 A (SEIKO EPSON CORP.) 10 October 2000, paragraphs [0033]-[0078], fig. 1-11 (Family: none) | 1-6 |
| X | JP 2016-103025 A (NIKON CORP.) 02 June 2016, | 1-5 |
| Y | paragraphs [0103]-[0176], [0198], fig. 1-7 & US 2006/0072095 A1 & WO 2004/090952 A1, paragraphs [0118]-[0180], [0196], fig. 1-7 & EP 1612849 A1 & KR 10-2005-0121711 A & TW 200813647 A & HK 1140550 A | 6 |
| X | JP 11-126042 A (PIONEER CORP.) 11 May 1999, | 1-2 |
| Y | paragraphs [0018]-[0034], fig. 1-5 & US 6316072 B1, column 2, line 62 to column 6, line 6, fig. 1-6 | 3-6 |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26.03.2018 | 10.04.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 730 977 A1**

**INTERNATIONAL SEARCH REPORT**

| International application No. |
|---|
| PCT/JP2018/000393 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 50-4997 A (MITSUBISHI ELECTRIC CORP.) 20 | 1-2 |
| Y | January 1975, page 1 to Detailed Description of the Invention, fig. 2, 5 (Family: none) | 3-6 |
| X | Microfilm of the specification and drawings annexed to the request of Japanese Utility Model | 1-2 |
| Y | Application No. 4471/1989 (Laid-open No. 96188/1990) (TENYO CO., LTD.) 31 July 1990, claim 1, page 12, line 20 to page 22, line 10, fig. 11-15 (Family: none) | 3-6 |
| Y | JP 2016-505167 A (CARL ZEISS SMT GMBH) 18 February 2016, paragraphs [0093]-[0115], fig. 19-29 & WO 2014/111098 A1, page 53, line 29 to page 66, line 33, fig. 19-29 | 1-6 |
| Y | US 2011/0141567 A1 (STACK, Jared et al.) 16 June 2011, paragraph [0038], fig. 12 & WO 2011/084288 A1 & EP 2513703 A1 & CN 102763021 A | 1-6 |

Form PCT/ISA/210 (continuation of second sheet) (January 2015)

**REFERENCES CITED IN THE DESCRIPTION**

**Patent documents cited in the description**

- JP 2014209237 A
- JP 2013505472 W
- JP 2013084009 A